# EUROPÄISCHE PATENTSCHRIFT

(11) **EP 0 693 333 B1**
(45) Veröffentlichungstag und Bekanntmachung des Hinweises auf die Patenterteilung: **22.10.1997**
(21) Anmeldenummer: 95111057.6
(22) Anmeldetag: 14.07.1995
(51) Int. Cl.: B21D 43/05

(54) **Verfahren zur Schwingungsdämpfung von angetriebenen Bauteilen von Werkstücktransporteinrichtungen**
Vibration damping method for driven elements in workpiece transfer devices
Méthode d'amortissement de vibrations pour des éléments entraînés dans des dispositifs de transfert de pièces

(30) Priorität: 21.07.1994 DE 4425739
(43) Veröffentlichungstag der Anmeldung: 24.01.1996
(73) Patentinhaber: SCHULER PRESSEN GmbH & Co., D-73033 Göppingen (DE)
(72) Erfinder: Klemm, Peter, Dr. Ing., D-70619 Stuttgart (DE); Rudloff, Hilmar Dr. Ing., D-73257 Köngen (DE)

(56) Entgegenhaltungen:
- WO-A-94/21403
- DE-A- 3 004 861
- PATENT ABSTRACTS OF JAPAN vol. 017 no. 149 (P-1509) ,24.März 1993 & JP-A-04 319715 (MEIDENSHA CORP) 10.November 1992,

## Beschreibung

Die Erfindung betrifft ein Verfahren zur Schwingungsdämpfung von angetriebenen Bauteilen nach der im Oberbegriff des Anspruchs 1 näher definierten Art.

Die mechanischen Bauelemente von elektrisch angetriebenen Bauteilen von Werkstücktransporteinrichtungen in und an umformenden Maschinen, insbesondere Pressen und Stanzmaschinen, müssen aufgrund der auftretenden Beschleunigungskräfte, des Gewichts der Bauteile und der Schwingungsanregungen durch die Antriebe der Bauteile, sowie der Pressenschwingung möglichst steif und schwingungsdampfend ausgeführt werden.

Aufgrund der genannten Anforderungen sind die mechanischen Bauelemente meistens aufwendig und teuer. Beispielsweise müssen, um die zu bewegenden Massen gering zu halten, Faserverbundwerkstoffe eingesetzt werden, um die geforderte Steifigkeit der mechanischen Bauelemente zu erzielen.

Zur Lösung des genannten Problemes sind aus der Praxis mechanische Dämpfungsvorrichtungen bekannt. So ist beispielsweise aus der DE-PS 30 04 861 (nächster Stand der Technik) eine Transfervorrichtung zum Transport von Werkstücken von Station zu Station einer Presse bekannt, welche eine Bremseinrichtung aufweist, die der Drehbewegung einer Welle entgegenwirkt.

In der DE-PS 22 00 754 ist ein Antrieb für die Greiferschienenlängsbewegung an mechanischen Pressen, insbesondere Stufenpressen, offenbart, bei dem die einzelnen zu beschleunigenden Massen der Bauteile sowie die zurückzulegenden Wege derselben so gering als möglich gehalten werden, so daß auch bei einer Anwendung an Fressen mit hoher Hubzahl, wie z.B. an schnellaufenden Stufenpressen, ein ruhiger, vibrationsarmer Lauf bei geringem Verschleiß der Übertragungselemente erreicht wird.

Nachteilig an den genannten mechanischen Ausführungen zur Lösung des Problems ist jedoch, daß die hierzu notwendigen Vorrichtungen kompliziert aufgebaut und somit teuer in der Herstellung und Montage sind.

Der vorliegenden Erfindung liegt daher die Aufgabe zugrunde, ein Verfahren zur Schwingungsdämpfung von angetriebenen Bauteilen von Werkstücktransporteinrichtungen in und an umformenden Maschinen vorzusehen, welches kostengünstig und einfach ist.

Erfindungsgemäß wird diese Aufgabe durch die im Anspruch 1 genannten Merkmale gelöst.

Durch das Vorsehen einer aktiven Schwingungsdämpfung, welche durch einen Dämpfungsregelkreis in Erganzung zu einem Lageregelkreis realisiert wird, können komplizierte mechanische Vorrichtungen vollständig entfallen, da die Schwingungsdämpfung durch eine direkte Beeinflussung des Antriebes der angetriebenen Bauteile erfolgt.

Zur Ermittlung der Bewegung der Transferschienenmitte, die beispielsweise schwingungsförmig verlaufen kann, wird hierbei direkt oder indirekt eine Zustandsgröße bzw. charakterisierende Größe des angetriebenen Bauteils ermittelt, welche in den Dämpfungsregler eingegeben und als Meßgröße für den Dämpfungsregler verwendet und von diesem ausgewertet wird.

Vorteilhafte Ausgestaltungen und Weiterbildungen der Erfindung ergeben sich aus den Unteransprüchen sowie den nachfolgend anhand der Zeichnung prinzipmäßig dargestellten Ausführungsbeispielen.

Es zeigt:
- Fig. 1: ein erstes Ausführungsbeispiel der vorliegenden Erfindung,
- Fig. 2: ein zweites Ausführungsbeispiel der vorliegenden Erfindung,
- Fig. 3: ein drittes Ausführungsbeispiel der vorliegenden Erfindung, und
- Fig. 4: ein viertes Ausführungsbeispiel der vorliegenden Erfindung.

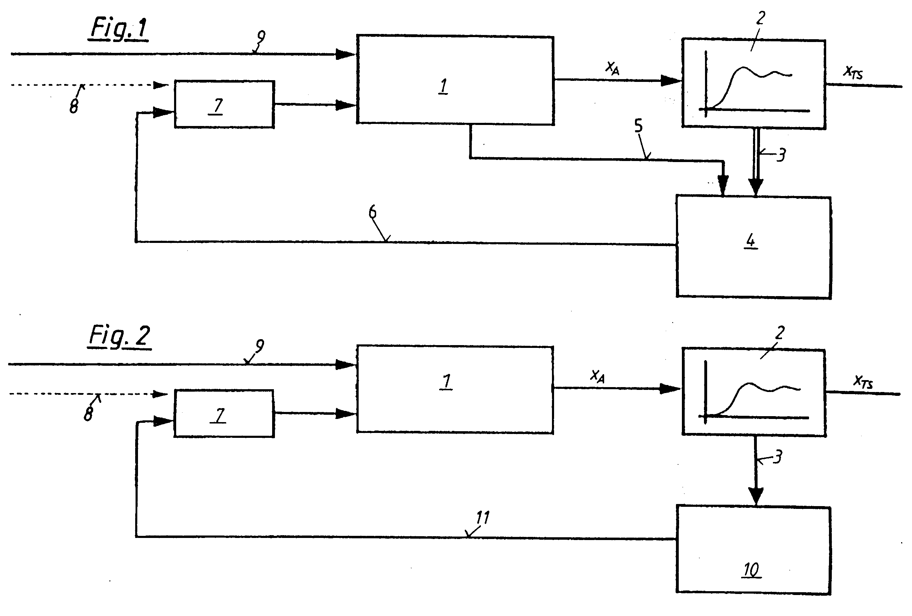

Bezugnehmend auf Fig. 1 ist ein erstes Ausführungsbeispiel der vorliegenden Erfindung dargestellt.

Ein elektrischer Antrieb 1 mit Lageregelung bei direkter und/oder indirekter Lageerfassung treibt beispielsweise eine Transferschiene in einer Pressenanlage an, wobei die Transferschiene aufgrund ihrer Bewegungen zu Schwingungen angeregt werden kann. Das schwingungstechnische Verhalten der Transferschiene ist in der Fig. 1 durch das Bezugszeichen 2 schematisch dargestellt. Der Antrieb 1 bewegt die Transferschiene in eine Antriebsposition x_{A}, wobei aufgrund der auftretenden Schwingungen die Mitte der Transferschiene sich nicht in der Position x_{A} befindet, sondern in einer davon abweichenden Position x_{TS}.

Die Zustandsgrößen 3 der Transferschiene, also beispielsweise die Beschleunigung der Transferschiene, werden in einen Beobachter 4 eingelesen.

Die Aufgabe des Beobachters 4 ist es, die nicht direkt messbaren oder nicht gemessenen charakterisierende Größen eines Systemes aus den Eingangsgrößen, also den Zustandsgrößen 3, zu berechnen. Durch die Verwendung des Beobachters 4 kann beispielsweise auf aufwendige Sensoren verzichtet werden.

Im Beobachter 4 wird ein regelungstechnisches Modell des zu beobachtenden Systems, also hier der Transferschiene, verwendet.

Gleichzeitig wird in den Beobachter 4 der Soll- oder Istwert der Antriebsgeschwindigkeit 5 des Antriebs 1 eingelesen. Aus diesen Zustandsgrößen 3 sowie dem Soll- oder Istwert der Antriebsgeschwindigkeit 5 ermittelt bzw. realisiert der Beobachter eine beobachtete Geschwindigkeit 6 der Transferschienenmitte.

Die beobachtete Geschwindigkeit 6 wird in einen Dämpfungsregler 7 eingegeben, wobei als zusätzliche Eingangsgröße auch die Führungsgeschwindigkeit 8 eingegeben werden kann, wie durch die gestrichelte Linie in der Fig. 1 angedeutet.

Die Führungsgeschwindigkeit 8 ist die Geschwindigkeit, die bei der Ermittlung einer Lageführungsgröße 9 zugrunde liegt. Die Führungsgeschwindigkeit 8 ergibt sich aus dem programmierten Bewegungsgesetz für die Werkstücktransporteinrichtung, und der Zeit oder dem Führungswinkel hierfür.

Der Dämpfungsregler 7 berechnet die erforderlichen Größen zur Dämpfung der Schwingung der Transferschiene. Die von dem Dämpfungsregler 7 ermittelte Größe nimmt dann Einfluß auf den Antrieb 1.

Zusätzlich ist als Eingabegröße für den Antrieb 1 die Lageführungsgröße 9 vorgesehen. Die Lageführungsgröße 9 stellt den Positionssollwert für jeweils eine der beispielsweise drei Achsen der Transferschiene dar. Hierbei wird der Positionssollwert jeder Achse ausgehend vom programmierten Bewegungsgesetz der programmierten Anfangs- und Endposition der Transferschiene sowie der Zeit oder einem Führungswinkel ermittelt.

Bei dem Ausführungsbeispiel nach der Fig. 1 wird somit die beobachtete Geschwindigkeit 6 der Transferschienenmitte in den Dämpfungsregler 7 zurückgeführt, welcher Einfluß auf den Antrieb 1 nimmt, so daß eine aktive Schwingungsdämpfung vorhanden ist. Der Dämpfungsregler 7 ist beispielsweise als Proportionalregler ausgeführt.

Bezugnehmend auf Fig. 2 ist ein zweites Ausführungsbeispiel der vorliegenden Erfindung dargestellt. Die bereits im Zusammenhang mit der Beschreibung der Fig. 1 eingeführten Bezugszeichen sollen auch für gleiche Bauelemente in dem Ausführungsbeispiel nach der Fig. 2 verwendet werden.

Im Gegensatz zu dem Ausführungsbeispiel nach der Fig. 1 wird auf die Verwendung eines Beobachters 4 verzichtet, d.h. die gemessenen Zustandsgrößen 3 werden in eine Einrichtung 10 zur Ermittlung der Geschwindigkeit der Transferschienenmitte eingelesen.

Die Einrichtung 10 zur Ermittlung der Geschwindigkeit der Transferschienenmitte hat als Ausgabegröße direkt die Geschwindigkeit 11 der Transferschienenmitte, welche in den Dämpfungsregler 7 eingelesen wird. In den Dämpfungsregler 7 kann zusätzlich die Führungsgeschwindigkeit 8 eingegeben werden.

Als Eingabe müssen für den Antrieb 1, der ebenfalls als Antrieb mit Lageregelung bei direkter und/oder indirekter Lageerfassung ausgeführt ist, somit die Lageführungsgröße 9 sowie die in dem Dämpfungsregler 7 ermittelte Größe eingegeben werden.

Hierdurch nimmt der Dämpfungsregler 7 Einfluß auf den Antrieb 1, wodurch die Schwingungen der Transferschiene gedämpft werden.

Im Gegensatz zu dem Ausführungsbeispiel nach der Fig. 1, bei dem die beobachtete Geschwindigkeit der Transferschienenmitte in den Dämpfungsregler 7 zurückgeführt wurde, wird bei dem Ausführungsbeispiel nach der Fig. 2 die in der Einrichtung 10 zur Ermittlung der Geschwindigkeit der Transferschienenmitte ohne Verwendung eines Beobachters ermittelte Geschwindigkeit der Transferschienenmitte in den Dämpfungsregler 7 zurückgeführt.

In den Ausführungsbeispielen nach den Fig. 1 und 2 ist jeweils der Dämpfungsregelkreis dem Lageregelkreis überlagert.

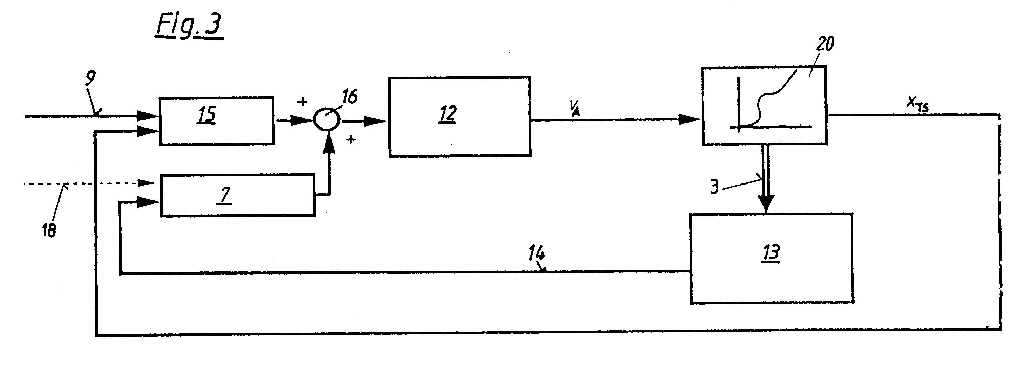

Fig. 3 zeigt ein drittes Ausführungsbeispiel der vorliegenden Erfindung.

Ein elektrischer Antrieb 12 mit Geschwindigkeitsregelung wird mit einer Antriebsgeschwindigkeit v_{A} betrieben. Aufgrund der Antriebsgeschwindigkeit v_{A} kann eine Transferschiene 20 zu Schwingungen angeregt werden. Im Gegensatz zu den Ausführungsbeispielen nach den Fig. 1 und 2 wird bei dem vorliegenden Ausführungsbeispiel die Geschwindigkeit der Transferschiene als Zustandsgröße 3 verwendet.

Die Position der Transferschienenmitte ist durch die Bezeichnung x_{TS} gekennzeichnet.

An der Transferschiene 20 werden Zustandsgrößen 3 gemessen, aus denen in einer Einrichtung 13 die Beschleunigung der Transferschienenmitte ermittelt wird. Der Wert 14 der ermittelten Beschleunigung der Transferschienenmitte wird in den Dämpfungsregler 7 eingegeben, wobei zusätzlich in den Dämpfungsregler 7 auch die Führungsbeschleunigung 18 miteingegeben werden kann.

Zusätzlich zu dem Dämpfungsregler 7 ist in dem vorliegenden Ausführungsbeispiel ein Lageregler 15 vorgesehen, in welchen einerseits die Position x_{TS} der Transferschienenmitte und andererseits die Führungsgröße 9 eingegeben werden.

In dem Lageregler 15 wird aus der gemessenen Istposition der Transferschiene und der ermittelten Lageführungsgröße 9 eine Komponente des Geschwindigkeits-Sollwerts für die Transferschiene 2 ermittelt, d.h. es wird ein Drehzahl-Sollwert für den Antrieb 12 ermittelt, der anschließend an eine Einrichtung 16 weitergeleitet wird.

Die Ausgabegrößen sowohl des Lagereglers 15 als auch des Dämpfungsreglers 7 werden in der Einrichtung 16 zum Geschwindigkeitssollwert zusammengefaßt, welcher Einfluß auf den Antrieb 12 der Transferschiene 2 nimmt. Hierdurch werden die Schwingungen der Transferschiene 2 aktiv gedämpft.

Bei dem Ausführungsbeispiel nach der Fig. 3 ist der Lageregelungskreis dem Dämpfungsregelkreis überlagert. Alternativ kann jedoch auch vorgesehen sein, daß der Dämpfungsregelkreis dem Lageregelungskreis überlagert ist.

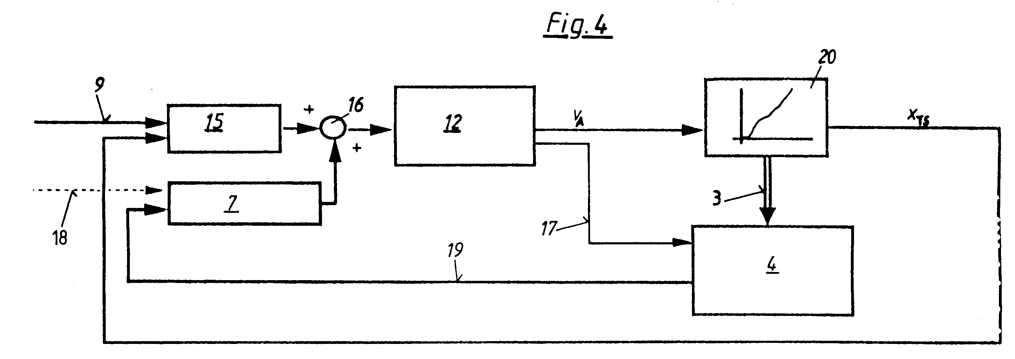

Fig. 4 zeigt eine Abwandlung des Ausführungsbeispieles nach der Fig. 3. Anstatt der Einrichtung 13 zur Ermittlung der Beschleunigung der Transferschienenmitte kann auch ein Beobachter 4 eingesetzt werden, welcher eine beobachtete Beschleunigung 19 der Transferschienenmitte ermittelt und diesen Wert an den Dämpfungsregler 7 weitergibt.

Hierbei ist auch vorgesehen, daß in den Beobachter 4 für die Beschleunigung der Transferschienenmitte der Soll- oder Istwert 17 der Antriebsgeschwindigkeit des Antriebs 12 eingegeben wird. In den Dämpfungsregler 7 kann zusätzlich die Führungsbeschleunigung 18 eingelesen werden.

Der sonstige Aufbau und die Funktionsweise des Ausführungsbeispiels nach der Fig. 4 entsprechen im wesentlichen dem Ausführungsbeispiel nach der Fig. 3.

Das gesamte Regelungssystem, wie im Zusammenhang mit den Fig. 1 bis 4 beschrieben, kann auf der Basis eines Mikrorechners realisiert werden, wobei das schwingungstechnische Verhalten der Transferschiene durch eine Differentialgleichung zweiter Ordnung beschrieben werden kann. Der Mikrorechner kann Bestandteil einer numerischen Steuerung oder eines Antriebsverstärkers sein, oder die Funktionen werden auf beide Systeme, die jeweils einen Mikrorechner aufweisen, verteilt.

## Patentansprüche

1. Verfahren zur Schwingungsdämpfung von angetriebenen Bauteilen von Werkstücktransporteinrichtungen in und an umformenden Maschinen, insbesondere Pressen und Stanzmaschinen,
**dadurch gekennzeichnet**, daß
die Schwingungsdämpfung aktiv erfolgt, wobei eine gemessene oder mittels eines Beobachters (4) rekonstruierte Zustandsgröße (6,11,14,19) des angetriebenen Bauteiles ermittelt wird, wonach die Zustandsgröße (6,11, 14,19) in einen Dämpfungsregler (7) eingegeben wird, welcher auf den Antrieb (1,12) der angetriebenen Bauteile Einfluß nimmt, wobei ein Dämpfungsregelkreis in Ergänzung zu einem Lageregelungskreis realisiert wird.

2. Verfahren nach Anspruch 1,
**dadurch gekennzeichnet**, daß
weitere Zustandsgrößen (3) als Meßwerte für den Beobachter (4) verwendet werden.

3. Verfahren nach Anspruch 1 oder 2,
**dadurch gekennzeichnet**, daß
in den Beobachter (4) der Sollwert und/oder der Istwert der Antriebsgeschwindigkeit (5,17) des angetriebenen Bauteiles eingegeben wird.

4. Verfahren nach Anspruch 1, wobei eine gemessene Zustandsgröße (11,14) des angetriebenen Bauteiles ermittelt wird,
**dadurch gekennzeichnet**, daß
weitere Zustandsgrößen (3) zur Ermittlung der Zustandsgrößen (11,14) verwendet werden.

5. Verfahren nach einem der Ansprüche 1 bis 4,
**dadurch gekennzeichnet**, daß
der Dämpfungsregelkreis dem Lageregelungskreis überlagert ist.

6. Verfahren nach einem der Ansprüche 1 bis 4,
**dadurch gekennzeichnet**, daß
der Lageregelungskreis dem Dämpfungsregelkreis überlagert ist.

7. Verfahren nach einem der Ansprüche 1 bis 6,
**dadurch gekennzeichnet**, daß
in den Dämpfungsregler (7) als zusätzliche Eingangsgröße die Führungsgeschwindigkeit (8) oder die Führungsbeschleunigung (18) des angetriebenen Bauteils eingegeben wird.

## Claims

1. Vibration damping method for driven components in workpiece transfer devices in and on shaping machines, for example presses and punching machines, characterized in that the vibration damping takes place actively, a status variable (6, 11, 14, 19), which has been measured or reconstructed by means of an observer (4), of the driven component being determined, after which the status variable (6, 11, 14, 19) is entered into a damping controller (7) which influences the drive (1, 12) of the driven components, a damping control circuit being realised as a complement to a position control circuit.

2. Method according to Claim 1, characterized in that further status variables (3) are used as measured values for the observer (4).

3. Method according to Claim 1 or 2, characterized in that the desired value and/or the actual value of the drive speed (5, 17) of the driven component is entered into the observer (4).

4. Method according to Claim 1, a measured status variable (11, 14) of the driven component being determined, characterized in that further status variables (3) are used to determine the status of variables (11, 14).

5. Method according to one of Claims 1 to 4, characterized in that the damping control circuit is superimposed on the position control circuit.

6. Method according to one of Claims 1 to 4, characterized in that the position control circuit is superimposed on the damping control circuit.

7. Method according to one of Claims 1 to 6, characterized in that the control speed (8) or the control acceleration (18) of the driven component is entered into the damping controller (7) as an additional input variable.

## Revendications

1. Procédé pour amortir des oscillations de pièces entraînées d'installations de transport de pièces d'outillage dans et vers des machines de formage, notamment des presses et des machines d'estampage,
**caractérisé en ce que** l'amortissement des oscillations se fait de façon active, dans laquelle une grandeur instantanée (6, 11, 14, 19) de la pièce entraînée est déterminée par mesure, ou reconstituée, au moyen d'un dispositif de surveillance (4), après quoi cette grandeur (6, 11, 14, 19) est introduite dans un régulateur de l'amortissement (7) qui influe sur l'entraînement (1, 12) de la pièce entraînée, de manière à créer un circuit de régulation des amortissements en compléments au circuit de régulation des paliers.

2. Procédé selon la revendication 1,
**caractérisé en ce que** d'autres grandeurs instantanées (3) peuvent être utilisées par le dispositif de surveillance (4).

3. Procédé selon la revendication 1 ou 2,
**caractérisé en ce que** l'on introduit dans le dispositif de surveillance (4) la valeur de consigne et/ou la valeur réelle de la vitesse d'entraînement (5, 17) de la pièce entraînée.

4. Procédé selon la revendication 1, dans lequel on prend en compte une grandeur instantanée mesurée (11, 14) de la pièce entraînée,
**caractérisé en ce que** d'autres grandeurs instantanées (3) sont utilisées pour déterminer les grandeurs instantanées (11, 14).

5. Procédé selon les revendications 1 à 4,
**caractérisé en ce que** le circuit de régulation des amortisseurs est superposé au circuit de régulation des paliers.

6. Procédé selon les revendications 1 à 4,
**caractérisé en ce que** le circuit de régulation des paliers est superposé au circuit de régulation des amortisseurs.

7. Procédé selon les revendications 1 à 6,
**caractérisé en ce que** le régulateur de l'amortisseur (7) reçoit en outre un signal d'entrée relatif à la vitesse de guidage (8) ou à l'accélération de guidage (18) de la pièce entraînée.
